# EUROPÄISCHE PATENTANMELDUNG

(11) **EP 2 738 578 A2**
(43) Veröffentlichungstag der Anmeldung: **04.06.2014**
(21) Anmeldenummer: 13186077.7
(22) Anmeldetag: 26.09.2013
(51) Int. Cl.: G01V 13/00

(54) **Verfahren zum Reinigen wenigstens einer Teilfläche eines Sonartransponders**

(30) Priorität: 28.11.2012 DE 102012023199
(71) Anmelder: L-3 Communications ELAC Nautik GmbH, 24118 Kiel (DE)
(72) Erfinder: Thomsen, Thies, 24251 Osdorf (DE)
(74) Vertreter: Lobemeier, Martin Landolf

(57) **Zusammenfassung**

Verfahren zum Reinigen wenigstens einer Teilfläche eines Sonartransponders (10), die für Ablagerungen durch Bewuchs mit marinen Organismen anfällig ist, wobei der Sonartransponder (10) eine elastische Membran (30), die wenigstens die Teilfläche des Sonartransponders (10) überdeckt, und ein Mittel zum Einbringen eines Fluids zwischen der Teilfläche des Sonartransponders (10) und der Membran (30) zum Bewirken einer Oberflächenvergrößerung der elastischen Membran (30), aufweist, gekennzeichnet durch Dehnen der elastischen Membran (30) durch Einbringen des Fluids zwischen der Teilfläche des Sonartransponders (10) und der Membran (30), sodass die Ablagerungen Zug- und Scherspannungen ausgesetzt werden und von der elastischen Membran (30) abplatzen.

## Beschreibung

Die Erfindung betrifft ein Verfahren zum Reinigen wenigstens einer Teilfläche eines Sonartransponders.

Bei der Planung und Errichtung von einzelnen Offshore-Windenergieanlagen oder auch gesamter Windparks wird seitens der für die entsprechende Zulassung verantwortlichen Behörde, dem Bundesamt für Seeschifffahrt und Hydrographie, im Rahmen des einschlägigen Genehmigungsverfahrens regelmäßig vorgeschrieben, dass die Windenergieanlagen als künstliche Unterwassergefahrenquellen für U-Boote durch Sonartransponder akustisch sichtbar gemacht werden.

Insbesondere ist vorgesehen, dass die an Windenergieanlagen installierten Sonartransponder in einem passiven Empfangsmodus die Umgebung auf ein von einem U-Boot abgegebenes Aktivierungssignal überwachen und bei Empfang eines solchen Signals in einen aktiven Sendemodus geschaltet werden, in dem die Sonartransponder selbst ein definiertes Signal abgeben.

Für die Funktionsfähigkeit der Sonartransponder erscheinen insbesondere lange Ruhephasen, innerhalb der sich die Sonartransponder passiv verhalten, aufgrund der Oberflächenbesiedlung durch marine Organismen problematisch. Wenngleich die Entstehung von Biofilmen durch die Verwendung entsprechender Materialien und Beschichtungen mehr oder minder gut unterbunden werden kann, ist der Besiedlung durch Meerestiere, wie z.B. Muscheln und sessile Krebse, nur schwer entgegen zu wirken. Daher bedarf es zur Aufrechterhaltung der Funktion derartiger in Windparks eingesetzter Sonartransponder einer recht aufwändigen regelmäßigen Kontrolle und mechanischen Reinigung (siehe Fricke et al.: Erforschung von Sonartranspondern für Offshore-Windparks und technische Integration in ein Gesamtkonzept, Abschlussbericht zum Forschungsvorhaben FKZ0325104A/B, Hannover, 2012. und Wikipedia: Biofouling. Online encyclopedia. Version 25.10.2012).

Aufgabe der Erfindung ist es daher, ein Verfahren zur Reinigung eines Sonartransponders zu schaffen, das mit geringem Aufwand durchzuführen ist.

Diese Aufgabe wird durch das Verfahren mit den Merkmalen von Anspruch 1 gelöst. Die Unteransprüche geben vorteilhafte Ausgestaltungen der Erfindung wieder.

Grundgedanke der Erfindung ist es die von Bewuchs freizuhaltende (Teil-)Oberfläche des Sonartransponders mit einer elastischen Membran zu überziehen, die durch Einbringen eines Fluids zwischen der Oberfläche des Sonartransponders und der Membran gedehnt werden kann.

Durch die Membran kann der Bewuchs auf der Membran zwar nicht (vollständig) unterbunden werden, jedoch führt eine Vergrößerung der Membranoberfläche zu Zug- und Scherspannungen in dem sich auf der Membran absetzenden Bewuchs, die ein Abplatzen des Bewuchses von der Membran bewirken. Aufgabe der Membran ist es daher, einerseits die Oberfläche des Sonartransponders vor direktem Bewuchs zu schützen, wobei die Membran andererseits durch Expansion eine selbstreinigende Wirkung entfalten kann.

Zwar kann die Membran durch einfaches Beaufschlagen mit einem Fluid durch Einbringen des Fluids zwischen Oberfläche und Membran gedehnt werden, ohne dass eine Abdichtung der Oberfläche erfolgen muss - bevorzugt umschließt die Membran aber die Oberfläche unter Ausbildung eines geschlossenen mit Fluid füllbaren Raums diesen abdichtend, damit eine Verschmutzung der inneren Oberfläche durch Umwelteinflüsse dauerhaft ausgeschlossen werden kann. Besonders bevorzugt wird in diesem Zusammenhang eine mit einem Fluidreservoir verbundene Pumpe verwendet, die das Fluid in den Raum und wieder in das Reservoir pumpt.

Alternativ ist vorgesehen, dass die Pumpe mit einer Saugleitung verbunden ist, über die Meereswasser angesaugt und in den Raum gepumpt werden kann.

Die Membran besteht bevorzugt aus Gummi, Polyurethan oder Silikon, also aus Materialien mit denen eine Dehnung bis zu 100 %, 200 % oder maximal gar 300 % erreicht werden kann.

Die Erfindung wird anhand eines schematisch dargestellten Ausführungsbeispiels näher erläutert, wobei die beigefügten Zeichnungen lediglich das Funktionsprinzip erläutern sollen. Es zeigen:
- Fig. 1: eine schematische Schnittansicht durch ein besonders bevorzugtes Ausführungsbeispiel nach der Erfindung in einem ersten Zustand; und
- Fig. 2: eine Schnittansicht durch das besonders bevorzugte Ausführungsbeispiel aus Fig. 1 in einem zweiten Zustand.

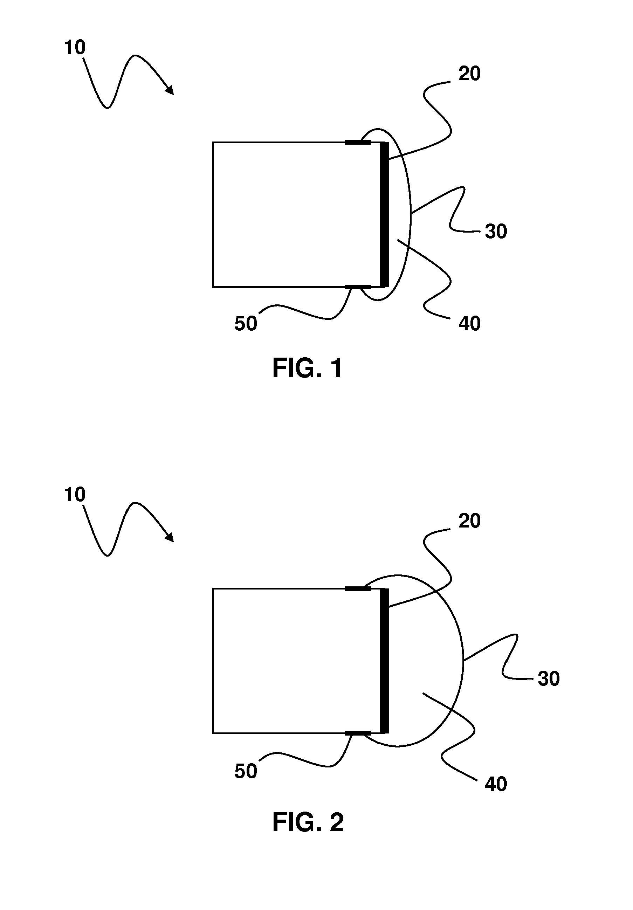

Fig. 1 zeigt ein schematisiertes Ausführungsbeispiel eines Sonartransponders nach der Erfindung. Der Sonartransponder 10 weist eine für Bewuchs anfällige Oberfläche 20 auf, wobei der Sonartransponder unterhalb der Wasserlinie an einer Offshore-Windenergieanlage befestigt ist. Der Sonartransponder 10 kann in eingebautem Zustand so in die Turmwandung der Offshore-Windenergieanlage oder deren Gründung eingebaut sein, dass dessen Oberfläche 20 mit der Turmwandung oder der Gründung fluchtet - der Sonartransponder 10 kann aber auch alternativ mittels eines Abstandhalters an der Windenergieanlage bzw. dessen Gründung befestigt sein.

Zum Schutz vor direktem Bewuchs ist die Teilfläche 20 des Sonartransponders 10 von einer Membran 30 abgedeckt. Bevorzugt dichtet die Membran 30 die Teiloberfläche 20 gegenüber der Umwelt unter Ausbildung eines zwischen Teilfläche 20 und Membran 30 angeordneten Raums 40 ab. Hierfür weist der Sonartransponder 10 eine Dichtung 50 auf, die ein Eindringen von (Meer-)Wasser in den von Teilfläche 20 und Membran 30 gebildeten Raum 40 verhindert.

Im in Fig. 1 gezeigten Zustand ist der von Teilfläche 20 und Membran 30 begrenzte Raum 40 übertrieben groß dargestellt - bevorzugt wird die Membran 30 im entspannten Zustand der Teilfläche 20 anliegen. Dabei ist das Material der Membran 30 so auszuwählen, dass diese die bestimmungsgemäße Verwendung des Sonartransponders 10 nicht beeinflusst.

Bilden sich nun durch Bewuchs von Organismen Ablagerungen auf der Membran 20, die die bestimmungsgemäße Verwendung des Sonartransponders 10 beeinträchtigen, ist eine Reinigung der Membran 30 erforderlich. Diese erfolgt durch Dehnen der elastisch ausgebildeten Membran 30, wobei die Ablagerungen Zug- und Scherspannungen ausgesetzt werden und so von der Membran 30 abplatzen; vgl. Fig. 2.

Zum Dehnen der Membran ist ein Mittel vorgesehen, das den zwischen Teilfläche 20 und Membran 30 gebildeten Raum 40 mit einem Fluid beaufschlagt. Durch Einbringen des Fluids in den Raum 40 und aufgrund der Elastizität der Membran 30 verdrängt das Fluid die Membran 30, die ihre Oberfläche vergrößert und Risse im Bewuchs induziert. Durch Auslassen des Fluids aus dem Raum 40 und aufgrund der Elastizität der Membran 30 kann die Membran 30 in ihren (in Fig. 1 gezeigten) Ausgangszustand zurückkehren.

Dieser Vorgang des Befüllens und Entleerens des Raums 40 mit einem Fluid kann mehrmals unmittelbar hintereinander erfolgen. Der Sonartransponder 10 kann insbesondere auch so ausgebildet sein, dass der Reinigungsvorgang in vorbestimmten Abständen durch eine entsprechende Steuerung automatisch durchgeführt wird. Alternativ kann der Reinigungsvorgang auch immer dann automatisch eingeleitet werden, wenn eine Verschlechterung der bestimmungsgemäßen Eigenschaften des Sonartransponders 10 erfasst wird.

Als Fluid kommen zwar grundsätzlich auch Gase und Gasgemische in Betracht, allerdings sind Flüssigkeiten aufgrund ihrer Inkompressibilität für Anwendungen unter Wasser bevorzugt. Insbesondere ist es von Vorteil, wenn der Raum zwischen Teilfläche 20 und Membran 30 geschlossen ist und ein Fluidreservoir verwendet wird, aus dem Fluid in den Raum 40 und aus dem Raum 40 in das Fluidreservoir gepumpt wird. Durch diese Ausbildung kann eine Verschmutzung innerhalb des Raums 40 wirkungsvoll vermieden werden.

Besonders einfach kann eine Ausgestaltung der Erfindung erfolgen, wenn kein Reservoir vorgesehen wird, sondern Meerwasser zum Vergrößern des Raums 40 bzw. der Membran 30 verwendet wird. Hierzu ist die Pumpe mit einer entsprechend nach Außen mündenden Saugleitung verbunden. Starken Verschmutzungen kann hierbei durch Vorsehen eines Filters in der Saugleitung entgegen gewirkt werden.

## Patentansprüche

1. Verfahren zum Reinigen wenigstens einer Teilfläche eines Sonartransponders (10), die für Ablagerungen durch Bewuchs mit marinen Organismen anfällig ist,
wobei der Sonartransponder (10)
- eine elastische Membran (30), die wenigstens die Teilfläche des Sonartransponders (10) überdeckt, und
- ein Mittel zum Einbringen eines Fluids zwischen der Teilfläche des Sonartransponders (10) und der Membran (30) zum Bewirken einer Oberflächenvergrößerung der elastischen Membran (30),
aufweist,
**gekennzeichnet durch**
Dehnen der elastischen Membran (30) **durch** Einbringen des Fluids zwischen der Teilfläche des Sonartransponders (10) und der Membran (30), sodass die Ablagerungen Zug- und Scherspannungen ausgesetzt werden und von der elastischen Membran (30) abplatzen.

2. Verfahren nach Anspruch 1, **dadurch gekennzeichnet, dass** die Membran (30) die Teilfläche unter Ausbildung eines geschlossenen mit Fluid füllbaren Raums (40) diesen abdichtend umschließt.

3. Verfahren nach einem der vorhergehenden Ansprüche, **dadurch gekennzeichnet, dass** das Mittel eine Pumpe ist.

4. Verfahren nach Anspruch 3, **dadurch gekennzeichnet, dass** die Pumpe mit einem Fluidreservoir verbunden ist.

5. Verfahren nach Anspruch 3, **dadurch gekennzeichnet, dass** die Pumpe mit einer Saugleitung zum Ansaugen von Umgebungswasser verbunden ist.

6. Verfahren nach einem der vorhergehenden Ansprüche, **dadurch gekennzeichnet, dass** die Membran aus Gummi, Polyurethan oder Silikon besteht.

7. Verfahren nach einem der vorhergehenden Ansprüche, dass die Teilfläche die Oberfläche des elektroakustischen Wandlers des Sonartransponders (10) ist.
